# EUROPEAN PATENT APPLICATION

(11) **EP 3 925 697 A1**
(43) Date of publication of application: **22.12.2021**
(21) Application number: 21152480.6
(22) Date of filing: 20.01.2021
(51) Int. Cl.: B01J 12/00, H01M 10/52, H01M 50/383

(54) **GAS RECOMBINATION UNIT**

(30) Priority: 17.06.2020 PL 4345120
(71) Applicant: Bater Spolka Z Ograniczona Odpowiedzialnoscia, 01-376 Warsaw (PL)
(72) Inventor: Moszczynski, Piotr, 05-870 Debowka (PL)
(74) Representative: Kondrat, Mariusz

(57) **Abstract**

The subject of invention is a device for the recombination of gases, i.e. oxygen and hydrogen with the production of water vapour, having a gas-tight housing containing a body with a ring, a cap and a cylinder, inside of which there is a recombination device with a catalyst and an adsorbent, characterised by that the cylinder is a cylinder with an elliptic base equipped with a bowl (8), the bowl (8) comprises two circulation openings (6) forming recesses (6') provided with fixing sockets (9), in which two flame absorbers (11) with valves (10) are seated, the cap (1) is capsule-shaped and provided with inlet/outlet openings (5) and is connected to the walls (7) of the circulation openings (6) by means of an abutment (12) located on the external groove of the walls (7).

## Description

The subject-matter of the invention is a gas recombination unit.

From document EP1807191 B1, there is known a recombinator characterised by a shielding element which is positioned above the recombination unit. The shielding element protects the recombination unit from droplets of water that tend to form on the inner wall of the container and fall towards the recombination unit. Therefore, the shield effectively prevents the unintentional wetting of the recombination unit by droplets of water and keeps, to a substantial extent, the recombined water away from the recombination unit.

From document PL220922 B1, there is known a gas recombination plug having a gas-tight housing equipped inside with a recombination device with a catalyst and adsorbent, an overpressure valve, a vacuum valve and an anti-ignition fuse. The device is characterised by that its gas-tight housing consists of a basket, a body, a condensing cylinder and a cap. Whereby the basket is cylindrical in shape and provided with openings, and the body is conical in shape, positioned on the basket and contains a foot inside. The condensation cylinder, on the other hand, is located on the body, has the shape of a cylinder tapered at the top with a conical neck consisting of a transverse rib of circular shape on the outside, stiffened by vertical ribs, and on the inside, in the lower part, equipped with transverse flanges with wedges, tapered towards the top by chamfering and terminated with a venturi; inside, equipped with a catalytic core, a drip cap, a two-way valve and an anti-ignition fuse. In addition, the said catalytic core is shaped like a ceramic tube filled with a catalyst and adsorbent, embedded inside a sleeve in the foot situated in the body. The drip cap is located above the catalytic core and has the shape of a cover convexing to the outside and concaving to the inside. On the other hand, the two-way valve is situated above the drip cap and constitutes a modular combination of the following one-way valves: overpressure and vacuum valve, located in a housing equipped with inlet ports. In contrast, the ignition fuse, made of porous ceramic material, is embedded tightly between the cap and the two-way valve, in the constriction of the top part of the condensing cylinder. The cap is equipped with the inlet-and-outlet openings, with clips for connecting to the condensation cylinder and with transverse spacing ribs.

From document PL222713 B3, there is known a stopper constituting a modification of the apparatus disclosed in document PL220922 B1, in which stopper, the basket and the foot constitute a compact monolithic element placed inside the body, with which they are joined to form a coherent whole by means of joints arranged symmetrically around the circumference in the form of longitudinal spacing ribs. The foot is provided, on the inner side, with longitudinal spacing ribs symmetrically distributed around the perimeter of the side wall, and, at the base, with the inlet-and-outlet openings symmetrically distributed around the perimeter of the side wall.

The purpose of the invention was to provide a new gas recombination device to reduce the risk of explosion during operation.

The essence of the invention is a device for the recombination of gases, i.e. oxygen and hydrogen, while generating steam. It has a gas-tight housing containing a body with a ring, a cap and a cylinder, inside of which there is a recombination device with a catalyst and adsorbent, characterised by that the cylinder is a cylinder with an elliptical base equipped with a bowl, the bowl contains two circulation openings forming recesses provided with the fixing sockets in which two flame absorbers with valves are installed, the cap is shaped like a capsule and provided with the inlet-and-outlet openings and is connected to the walls of the circulation slots by an abutment situated on the outer groove of the walls.

Preferably, the cap is provided with a slot and positioning-distancing ribs.

Preferably, the outlet-and-inlet openings are elliptical.

Preferably, the inlet and outlet openings are offset from the centre of the cylinder.

Preferably, the diameter of the outlet-inlet openings is the same.

Preferably, the diameter of the cylinder decreases in the direction of the bowl.

Preferably, the valves are overpressure relief valves.

Preferably, the valves are two identical valves openable at an overpressure in the range 30-100 mbar.

Preferably, the valves comprise a pair of valves, the first valve being openable at an overpressure in the range 30-100 mbar and the second valve being openable at an overpressure in the range 80-200 mbar.

Preferably, the valves are vacuum valves.

Preferably, the valves are two identical valves openable at a vacuum in the range 30-100 mbar.

Preferably, the valves comprise a pair of valves, the first valve being openable valve at a vacuum in the range 30-100 mbar and the second valve being openable at a vacuum in the range 80-200 mbar.

The invention provides the following advantages:
- it improves the operating convenience;
- it increases safety in the strategic industrial energy sector;
- it minimises the problem of pressure surges in the system
- it provides the possibility of working with different overpressure and vacuum ranges without compromising the design of the entire unit
- it provides an option to combine the processes of the thermal convection with condensation, since the water vapour formed on the catalytic core moves towards the colder walls of the cylinder of the device according to the invention, and in contact therewith a condensation phenomenon occurs.
- there are no moving parts inside the unit
- the unit has a compact design
- it provides the possibility of adapting the operating parameters to operating conditions
- it can operate with or without the bidirectional pressure regulators installed therein
- it provides the possibility of installing valves that will open at different overpressure and vacuum pressures values in two separate mounting holes
- two independent flame absorbers protect the interior of the unit from bursting because one of them has been blocked;

The subject-matter of the invention is depicted in the embodiments and shown in the drawing on which fig. 1 shows a front view of the recombination unit according to the invention; fig. 2 shows a top view of the unit; fig. 3 shows the unit in front view with the inside of the cylinder visible, taking into account the inside of the cylinder; fig. 4 shows the unit according to a side view with the inside of the cylinder visible; fig. 5 shows the cylinder-cap, where A) shows the cylinder-cap in the top view - from the side of the cap; B) the bottom of the cylinder-cap in view from the core side; fig. 6 shows a view of a cylinder without a cylinder-cap, where A) is a side view, B) is the front view, C) is the longitudinal section.

### Example 1

The device according to the invention is illustrated in the drawing where **1** presents the cap, **2** denotes the condensing cylinder, **3** is the ring, **4** is the body, **5** are the outlet-inlet openings in the cap, **6** are the circulation holes in the cylinder,**6'** denotes the recess, **7** is the outer wall of the circulation holes, **8** is the bowl of the cylinder, **9** are the mounting slots in the circulation openings, **10** is the valve assembly, **11** is the flame absorber assembly,**12** is the attachment clip for the cap, **13** is the slot without ribs for attaching the cap to the cylinder, **14** are the positioning-distancing ribs, **15** indicates the bayonet fitting, **16** is the sealing of the body, **17** denotes the catalytic core, **18** is the sealing of the body-cylinder interface.

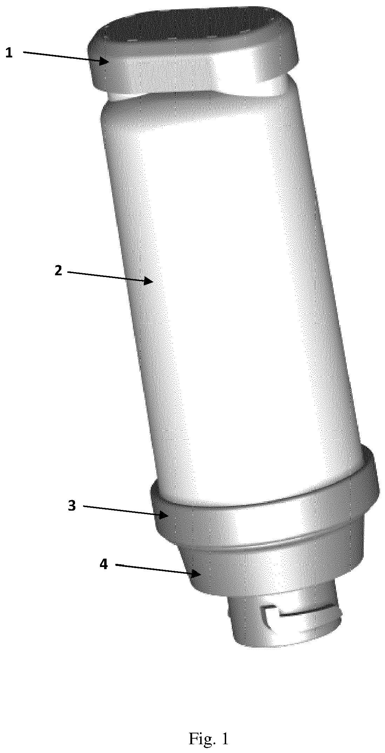

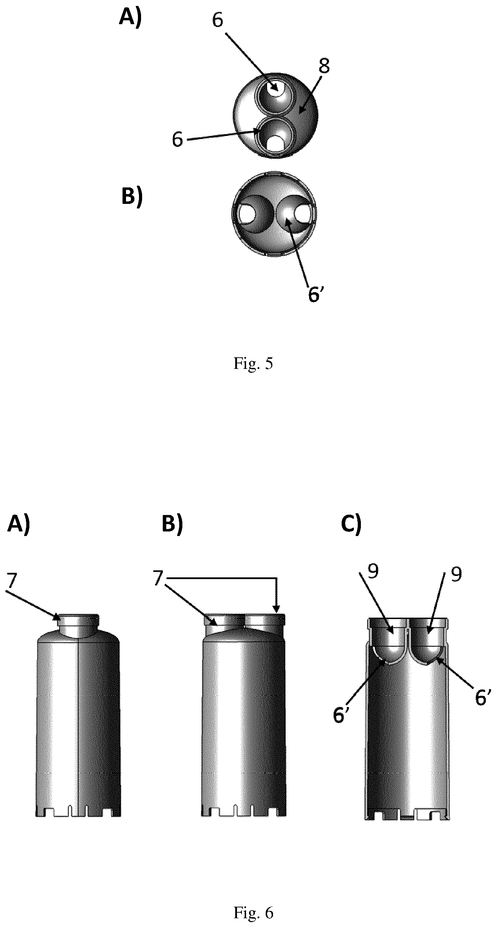

The gas recombination device according to the invention is provided with a gas-tight housing comprising a body **4**with a ring **3,** a cap **1** and a condensing cylinder **2** (fig. 1 and fig. 6). Inside the cylinder is a recombination device with catalyst and absorbent (i.e. catalytic core **17** attached to body **4**) and body-cylinder interface seal **18.** The body **4,** on the other hand, includes a bayonet fitting **15** and a body seal **16.** The bayonet fitting **15** allows the body **4** to be permanently mounted with the hydrogen-emitting device. By contrast, the use of a seal **16** in the form of a disc makes it possible to eliminate potential differences in the height of the elements being connected.

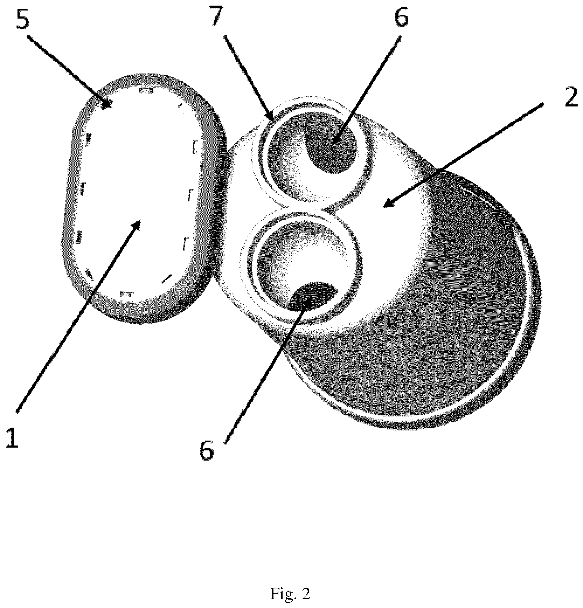

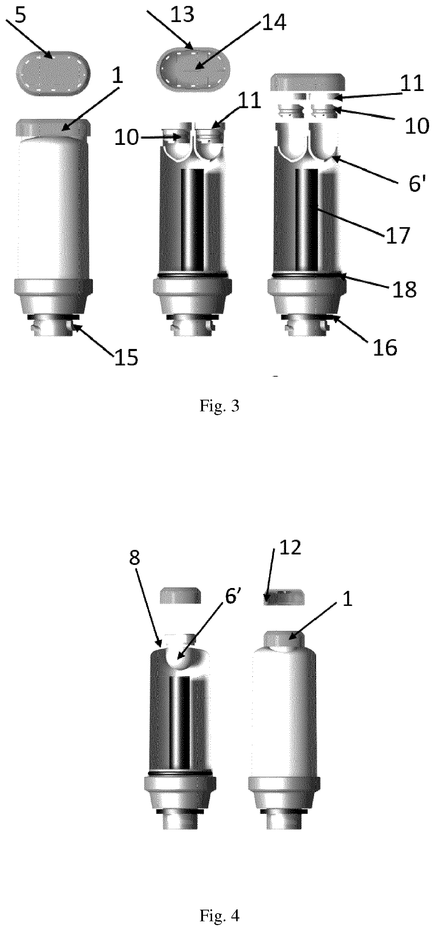

Furthermore, the cylinder **2** is a cylinder with an elliptical base (fig. 2), which is ended from above by a bowl **8** (fig. 5). The asymmetry of the cylinder in the cross-section at different projections increases the dynamics of cooling the condensate and of the convection processes. The bowl **8** of the cylinder **2** has two circulation openings **6** with outer walls **7** in contact with the cap **1.** The circulation openings **6** form cavities **6'** inside the cylinder **2** (fig. 5) containing mounting sockets **9** in which two independent flame absorbers **11** with valves **10** are embedded (fig. 3 and 4). At the same time, two independent flame absorbers **11** protect the interior of the appliance from bursting due to clogging. In contrast, the valves **10** in question are designed to operate at different pressures. For example, they can be opened at two levels of either the over- or the vacuum pressure.

In this embodiment, the valves **10** are two identical valves that open at an overpressure of 30 mbar and close when the pressure equalizes with the environment.

Absorbers **11** act as a barrier between the unit and the environment. The gases pass freely through the absorber, but the flame from outside will be extinguished as it tries to pass through the absorber into the appliance. During operation of the unit according to the invention, the absorbers must be unobstructed otherwise the pressure may rise and damage the device according to the invention and the larger device in which it operates.

Capsule-shaped cap **1** (fig. 2) is fitted with inlet-outlet openings **5** and connects to the walls **7** of the circulation openings **6** mechanically by means of a clip **12** on the outer groove of the walls **7.** In this embodiment, the cap **1** is equipped with a slot **13** without ribs and with positioning-distancing ribs **14.** At the same time, the slot without ribs **13** increases the flexibility of the cap **1** when pressing it onto the cylinder **2** and makes it easier for condensate that has escaped from the cap to drain off in the form of steam. On the other hand, the positioning-distancing ribs **14** are used to avoid clogging of the absorber surface as a result of cap installation.

The height of the positioning-distancing ribs **14** allows the free flow of gas from and into the device according to the invention when regulating the pressure inside the device.

The capsule-like shape of the cap indicates whether the cap was properly rotated during installation on the device. The outlet-inlet openings **5** increase the flow and circulation of inlet and outlet gases. Furthermore, as indicated in fig. 2, in this embodiment the outlet-inlet openings **5** are elliptical and offset from the centre of the cylinder **2,** which increases the recombination rate as a result of rapid temperature transfer out of the system. In this embodiment, the diameter of the outlet-inlet **5** openings is the same.

### Example 2

Device as in example 1, except that two identical valves **10** open at an overpressure of 100 mbar and close when the pressure equalizes with the environment.

### Example 3

Unit as in Example 1, except that the valves **10** are two identical valves which open within 30 mbar at vacuum pressure and close when the pressure equalizes with the surroundings

### Example 4

Device as in example 1, except that the valves **10** are two identical valves which open at 100 mbar under vacuum pressure and close when the pressure equalizes with the environment.

### Example 5

Unit as in example 1, except that the valves **10** are two different valves, with the first valve opening at an overpressure in the range of 30 mbar and the second valve opening at 80 mbar. Both valves close when the pressure equalizes.

### Example 6

Equipment as in Example 1, except that the valves **10** are two different valves, with the first valve opening at an overpressure in the 100 mbar range and the second valve opening at 200 mbar. Both valves close when the pressure equalizes.

### Example 7

The device as in example 1, except that the valves **10** are two different valves, the first opening at a vacuum in the range of 30 mbar and the second opening at a vacuum of 80 mbar. Both valves close when the pressure equalizes.

### Example 8

Device as in Example 1, except that the valves **10** are two different valves, the first opening at a vacuum in the 100 mbar range and the second opening at a vacuum of 200 mbar. Both valves close when the pressure equalizes.

## Claims

1. A device for the recombination of gases, i.e. oxygen and hydrogen with the production of water vapour, having a gas-tight housing containing a body with a ring, a cap and a cylinder, inside of which there is a recombination device with a catalyst and an adsorbent, **characterised by that** the cylinder is a cylinder with an elliptic base equipped with a bowl (8), the bowl (8) comprises two circulation openings (6) forming recesses (6') provided with fixing sockets (9), in which two flame absorbers (11) with valves (10) are seated, the cap (1) is capsule-shaped and provided with inlet/outlet openings (5) and is connected to the walls (7) of the circulation openings (6) by means of an abutment (12) located on the external groove of the walls (7).

2. A device according to claim 1, **characterized by that the** cap (1) is equipped with a slot (13) and positioning-distancing ribs (14).

3. A device according to claim 1 or 2, **characterized by that the** outlet-inlet openings (5) are elliptical.

4. Device according to any of the preceding claims. 1 to 3, **characterised in that** the outlet-inlet openings (5) are offset from the centre of the cylinder (2).

5. Device according to any of the preceding claims. 1 to 4, **characterized in that** the diameter of the outlet-inlet openings (5) is the same.

6. Device according to any of the preceding claims. 1 to **5,characterised in that** the diameter of the cylinder (2) decreases towards the bowl (8).

7. Device according to any of the preceding claims. 1 to 6, **characterised in that** the valves (10) are overpressure relief valves.

8. A device according to claim 7, **characterised in that the** valves (10) are two identical valves opening at an overpressure in the range 30-100 mbar.

9. A device according to claim **7characterised in that the** valves (10) are a pair of valves of which the first is an opening valve at an overpressure in the range 30-100 mbar and the second is an opening valve at an overpressure in the range 80-200 mbar.

10. Device according to any of the preceding claims. 1 to 6, **characterised in that the** valves (10) are vacuum valves.

11. A device according to claim 10, **characterised in that the** valves (10) are two identical valves opening at a vacuum in the range 30-100 mbar

12. A device according to claim 10, **characterised in that the** valves (10) are a pair of valves of which the first is an opening valve at a vacuum in the range 30-100 mbar and the second is an opening valve at a vacuum in the range 80-200 mbar.
